# EUROPÄISCHE PATENTSCHRIFT

(11) **EP 3 833 507 B1**
(45) Veröffentlichungstag und Bekanntmachung des Hinweises auf die Patenterteilung: **07.10.2026**
(21) Anmeldenummer: 19752480.4
(22) Anmeldetag: 07.08.2019
(51) Int. Cl.: B23Q 1/62, B23Q 3/18, B23B 31/36, B23Q 1/28

(54) **AUSRICHTVORRICHTUNG ZUM JUSTIEREN EINES WERKSTÜCKS AUF EINEM MASCHINENTISCH EINER NUMERISCH GESTEUERTEN WERKZEUGMASCHINE**
ALIGNMENT DEVICE FOR ADJUSTING A WORKPIECE ON A MACHINE TABLE OF A NUMERICALLY CONTROLLED MACHINE TOOL
DISPOSITIF D'ALIGNEMENT SERVANT À AJUSTER UNE PIÈCE SUR UNE TABLE DE MACHINE D'UNE MACHINE-OUTIL À COMMANDE NUMÉRIQUE

(30) Priorität: 07.08.2018 DE 102018213226
(43) Veröffentlichungstag der Anmeldung: 16.06.2021
(73) Patentinhaber: DMG MORI Pfronten GmbH, 87459 Pfronten (DE)
(72) Erfinder: ANGERHOFER, Marcus, 86975 Bernbeuren (DE); JANSEN, Benjamin, 87647 Unterthingau (DE)
(74) Vertreter: MERH-IP Matias Erny Reichl Hoffmann Patentanwälte PartG mbB
(86) Internationale Anmeldenummer: PCT/EP2019/071218
(87) Internationale Veröffentlichungsnummer: WO 2020/030692

(56) Entgegenhaltungen:
- EP-A1- 1 693 147
- EP-A2- 0 249 021
- EP-A2- 2 578 352
- DE-A1- 19 902 596
- DE-A1- 2 312 786
- DE-U1- 29 622 080
- DE-U1- 8 535 668
- US-A- 2 524 468
- US-A- 5 481 944

## Beschreibung

Die vorliegende Erfindung betrifft eine Ausrichtvorrichtung zum Justieren eines Werkstücks auf einem Maschinentisch einer numerisch gesteuerten Werkzeugmaschine. Des Weiteren betrifft die vorliegende Erfindung ein Verfahren zur Ausrichtung einer Position eines Werkstücks auf einem Maschinentisch einer numerisch gesteuerten Werkzeugmaschine.

### HINTERGRUND DER ERFINDUNG

Justiervorrichtungen für Werkstücke in Werkzeugmaschinen, wie sie zum Beispiel aus DE 10 2007 020 633 B4 oder aus DE 10 2016 104 066 A1 bekannt sind, dienen unter anderem der Justierung bei einem Rundlaufversatz des Werkstücks gegenüber der Drehachse des Maschinentisches. Solch ein Versatz kann dadurch hervorgerufen werden, dass zum Beispiel das Werkstück umgespannt werden musste und hierdurch die ursprünglich eingerichtete relative Lage des Werkstücks gegenüber dem Maschinentisch verloren ging.

In DE 10 2007 020 633 B4 wird eine Positioniervorrichtung beschrieben, wobei die Positioniervorrichtung einen Grundkörper und einen bezüglich einer Längsachse vor dem Grundkörper angeordneten Abtriebskörper zum Verbinden mit einem Werkstück aufweist. Ferner weist die Positioniervorrichtung ein mit dem Grundkörper verbundenes und sich entlang der Längsachse erstreckendes Verbindungselement und mindestens zwei am Grundkörper befestigte, quer zur Längsachse wirkende Exzenter-Aktoren, insbesondere Exzenter-Piezoaktoren, auf, wobei die Exzenter-Aktoren zum Verschieben des Abtriebskörpers relativ zum Grundkörper und senkrecht zur Längsachse durch elastisches Verformen des Verbindungselements eingerichtet sind.

Zudem wird in der DE 10 2007 020 633 B4 beschrieben, dass die Positioniervorrichtung mindestens zwei Neige-Aktoren, insbesondere Neige-Piezoaktoren, zum Neigen des Abtriebskörpers relativ zum Grundkörper besitzt.

In DE 10 2016 104 066 A1 wird eine Verstelleinheit sowie ein Verfahren zum Erfassen und zur Korrektur des Rundlauffehlers eines in einem Spannfutter eingespannten Werkstücks beschrieben, wobei die Verstelleinheit einen koaxial an einer Maschinenspindel befestigbaren Grundkörper aufweist. An der der Maschinenspindel abgewandten Seite des Grundkörpers ist ein separat vom Grundkörper ausgebildeter Futterflansch angeordnet, der eine zentrale Aufnahme für ein im Grundkörper radial verschiebbar gelagertes und axial verstellbares Zentrierstück aufweist. Es ist eine erste Exzenterscheibe mit einer zentralen Öffnung und eine zweite Exzenterscheibe mit einer zentralen Öffnung vorgesehen, wobei in den zentralen Öffnungen das Zentrierstück eingesetzt ist. Es ist mindestens ein Verstellmotor zur Verdrehung der ersten Exzenterscheibe und/oder der zweiten Exzenterscheibe vorgesehen. Das Dokument beschreibt weiterhin ein Verfahren zum Erfassen und zur Korrektur des Rundlauffehlers eines in einem Spannfutter eingespannten Werkstücks mittels einer Verstelleinheit.

Jedoch haben die beiden bekannten Justiervorrichtungen unter anderem den Nachteil, dass sie durch ihren ausladenden Aufbau unter anderem einen beträchtlichen Abstand zwischen dem Maschinentisch und dem zu bearbeitenden Werkstück erzeugen, da sowohl die Mechanik der Exzenterscheiben wie auch der Aufbau mit den Piezo-Aktoren viel Platz einnehmen, wobei es im Hinblick auf Bearbeitungsgenauigkeiten von Vorteil wäre, wenn sich das zu bearbeitende Werkstück möglichst nah am Maschinentisch befinden würde.

Zudem wird unter anderem in DE 10 2007 020 633 B4 gezeigt, dass die Last des Werkstücks stets durch den Verstellmechanismus gehalten werden muss, so dass eine Fixierung der einjustierten Lage von Werkstück zu Maschinentisch nur bedingt gegeben ist und je nach Lage des Schwerpunktes von Werkstück und Aufspannvorrichtung gegenüber dem Maschinentisch eine Veränderung der ursprünglich justierten Lage hervorgerufen werden kann.

Insbesondere ist dies von Nachteil, da hierdurch Bearbeitungsungenauigkeiten des Werkstücks hervorgerufen werden können, die während der Bearbeitung nur bedingt erfasst bzw. gemessen werden können und meistens erst nach Beendigung der Bearbeitung sichtbar werden. DE 23 12 786 A1 offenbart eine Ausrichtvorrichtung nach dem Oberbegriff von Anspruch 1, wobei der Verstellmechanismus keilförmige Elementen aufweist.

### ZUSAMMENFASSUNG DER ERFINDUNG

Eine Aufgabe der vorliegenden Erfindung ist es daher, eine Ausrichtvorrichtung zum Justieren eines Werkstücks auf einem Maschinentisch einer numerisch gesteuerten Werkzeugmaschine bereitzustellen, mit der die obigen Probleme vermieden werden.

Des Weiteren ist es Aufgabe der vorliegenden Erfindung, ein Verfahren zur Ausrichtung einer Position eines Werkstücks auf einem Maschinentisch einer numerisch gesteuerten Werkzeugmaschine bereitzustellen.

Diese Aufgaben werden gelöst durch eine Ausrichtvorrichtung nach Anspruch 1 und ein Verfahren nach Anspruch 13. Die abhängigen Ansprüche beziehen sich auf vorteilhafte Ausführungsbeispiele der erfindungsgemäßen Ausrichtvorrichtung.

Die erfindungsgemäße Ausrichtvorrichtung zum Justieren eines Werkstücks auf einem Maschinentisch einer numerisch gesteuerten Werkzeugmaschine weist auf: eine Unterplatte, die auf dem Maschinentisch der Werkzeugmaschine montierbar ist, eine auf der Unterplatte beweglich angeordnete Oberplatte, auf deren Oberseite ein Werkstückträger montierbar ist, ein Verstellmechanismus, der zwischen der Unterplatte und der Oberplatte zum Justieren der relativen Lage der Oberplatte zu der Unterplatte ausgebildet ist, und ein Arretiermechanismus, um die relative Lage der Oberplatte zu der Unterplatte zu sichern.

Durch die Verwendung der erfindungsgemäßen Ausrichtvorrichtung für das Justieren von Werkstücken auf dem Maschinentisch der Werkzeugmaschine sind keine hochgenauen Spannmittel, wie zum Beispiel ein Ringspann, nötig. Zudem ist für die Lage des aufgespannten Werkstücks von der unjustierten Lage zu der justierten Lage eine Justierbewegung von ca. ±0,25 mm ausreichend, je nach Ausgestaltung des Verstellmechanismus (z.B. in Abhängigkeit eines Keilwinkels).

Ferner kann mit der Verwendung der erfindungsgemäßen Ausrichtvorrichtung ein vollautomatischer Ausrichtprozess vollzogen werden, ohne dass der Bediener der Werkzeugmaschine in irgendeiner Weise händisch eingreifen muss. Damit können konstantere Ergebnisse der Bearbeitung des Werkstücks erzielt werden, was natürlich auch für die Reproduzierbarkeit eines spezifischen Werkstücks von großer Bedeutung ist.

Weiterhin ermöglicht die Verwendung der erfindungsgemäßen Ausrichtvorrichtung, dass ein Abschlagen im Arbeitsraum, welches der Kontrolle des Laufes des Werkstücks dient, überflüssig wird. Zudem können Durchmesser, die abgetastet/abgeschlagen werden müssen, zum Beispiel durch Spannpratzen überbaut werden.

Die erfindungsgemäße Ausrichtvorrichtung kann ferner für alle mechanischen Spannmittel eingesetzt werden und bietet dabei weiterhin den Vorteil, dass nur einmalige Anschaffungskosten für die Ausrichtvorrichtung entstehen im Gegensatz zu den Kosten für verschiedene Ringspann oder Dehnspanndorne, um das gesamte Werkstück- bzw. Bauteilspektrum abzudecken.

Zudem benötigt die erfindungsgemäße Ausrichtvorrichtung keine von der Werkzeugmaschine bereitgestellte Hydraulik, könnte aber an diese bei Bedarf angeschlossen werden. Dies führt unter anderem dazu, dass die erfindungsgemäße Ausrichtvorrichtung auf allen Fräs-Dreh-Maschinen eingesetzt werden kann.

Besonders vorteilhaft ist die erfindungsgemäße Ausrichtvorrichtung auch dahingehend, dass mit ihr Feineinstellungen für das Exzenterdrehen möglich sind.

Die erfindungsgemäße Ausrichtvorrichtung ist so ausgebildet, dass der Verstellmechanismus zwischen der Unterplatte und der Oberplatte derart ausgebildet ist, dass durch Einleiten einer mechanischen Kraft keilförmige Elemente derart zueinander verschoben werden, dass die Oberplatte relativ gegenüber der Unterplatte und im Wesentlichen parallel zu einer Ebene des Maschinentisches, auf der die Unterplatte montiert ist, verschoben wird.

Die erfindungsgemäße Ausrichtvorrichtung ist weiterhin so ausgebildet, dass der Verstellmechanismus ferner derart ausgebildet ist, dass zwei sich gegenüberliegende Paare von keilförmigen Elementen die Oberplatte in eine Richtung relativ gegenüber der Unterplatte verschieben, wobei die Oberplatte in zwei senkrecht zueinander stehenden Richtungen gegenüber der Unterplatte verschoben werden kann.

Durch den Einsatz von keilförmigen Elementen zur Justierung der relativen Lage von Werkstück zu Maschinentisch können auf einfache Weise Verstellungen mit hoher Genauigkeit durchgeführt werden. Zudem bieten keilförmige Elemente, abhängig von ihrem Keilwinkel, eine Sicherung der eingestellten relativen Lage von Werkstück zu Maschinentisch durch ihre Eigenschaft als selbsthemmendes Getriebe.

Zudem kann in vorteilhafter Weise durch die Verwendung der keilförmigen Elemente die für die Verschiebung der keilförmigen Elemente aufgebrachten Kraft, je nach Keilwinkel, deutlich verstärkt werden, so dass eine sehr hohe Verschiebekraft für die Justierung des Werkstücks gegenüber dem Maschinentisch erzeugt werden kann.

Eine weitere vorteilhafte Weiterbildung der erfindungsgemäßen Ausrichtvorrichtung ergibt sich dadurch, dass der Verstellmechanismus ferner derart ausgebildet ist, dass ein keilförmiges Element eines jeden Paares relativ zu dem anderen keilförmigen Element des jeweiligen Paares verschiebbar ist, wobei die verschiebbaren, keilförmigen Elemente, die gemeinsam die Verschiebung der Oberplatte in eine Richtung bewirken, mittels eines Hebelmechanismus miteinander gekoppelt sind.

Hierdurch ist es besonders vorteilhaft möglich, ein eventuell vorhandenes mechanisches Spiel zwischen den keilförmigen Elementen, die in eine Justierrichtung der Oberplatte der Ausrichtvorrichtung wirken, zu beseitigen und somit eine sehr präzise Einstellung/Justierung des Werkstücks gegenüber dem Maschinentisch zu ermöglichen.

Zudem besteht eine vorteilhafte Weiterbildung der erfindungsgemäßen Ausrichtvorrichtung darin, dass der Hebelmechanismus derart ausgebildet ist, dass die verschiebbaren, keilförmigen Elemente, die gemeinsam die Verschiebung der Oberplatte in eine Richtung bewirken, an ihren jeweiligen Enden in ihrer Verschieberichtung ein gemeinsames Hebelelement aufweisen, das in einem der Paare von keilförmigen Elementen, die die Verschiebung der Oberplatte in die senkrecht dazu stehende Richtung bewirken, drehbar gelagert ist und dadurch eine Verschiebebewegung des einen verschiebbaren, keilförmigen Elementes auf das andere verschiebbare, keilförmige Element für die Verschiebung der Oberplatte in eine Richtung übertragen werden kann.

Hierdurch ist es in vorteilhafter Weise möglich, lediglich eines der keilförmigen Elemente, welches in eine Justierrichtung der Oberplatte der Ausrichtvorrichtung wirkt, zum Beispiel mittels einer Spindel zu verschieben, so dass durch die Hebelelemente die Bewegung des einen keilförmigen Elements auf das andere, in gleicher Justierrichtung wirkende keilförmige Element übertragen werden kann.

Überdies kann eine vorteilhafte Weiterbildung der erfindungsgemäßen Ausrichtvorrichtung darin bestehen, dass das Zusammenwirken der Hebelelemente mit den entsprechenden verschiebbaren, keilförmigen Elementen, die eine Verschiebung der Oberplatte in eine Richtung bewirken, mittels einer Verstelleinrichtung (wie beispielsweise geschliffene Einstellscheiben) spielfrei eingestellt werden kann.

Eine weitere vorteilhafte Weiterbildung der erfindungsgemäßen Ausrichtvorrichtung ist, dass die Ausrichtvorrichtung ferner aufweist: zwei Spindeln zur Einleitung einer mechanischen Kraft zum Verschieben der Oberplatte relativ zu der Unterplatte, wobei eine erste Spindel der beiden Spindeln für eine erste Verschieberichtung der Oberplatte und eine zweite Spindel der beiden Spindeln für eine zweite Verschieberichtung senkrecht zu der ersten Verschieberichtung vorgesehen ist.

Hierdurch kann in vorteilhafter Weise mit jeder Spindel eine Verschieberichtung/Justierrichtung der Oberplatte zur Unterplatte der Ausrichtvorrichtung bedient werden.

Zudem kann die erfindungsgemäße Ausrichtvorrichtung dadurch vorteilhaft weitergebildet werden, dass jede der beiden Spindeln an der den keilförmigen Elementen gegenüberliegenden Seite einen Eingriffsabschnitt aufweist, an dem durch Rotation des Eingriffsabschnitts die Verschiebung der Oberplatte relativ zur Unterplatte bewirkt werden kann.

Die Eingriffsabschnitte ermöglichen in vorteilhafter Weise, dass Werkzeuge verschiedenster Art entweder automatisiert oder, bei Bedarf, händisch mit den Spindeln zum Justieren des Werkstücks gegenüber dem Maschinentisch in Eingriff gebracht werden können, um so eine Verstellung der Spindeln zu ermöglichen.

Ferner kann die erfindungsgemäße Ausrichtvorrichtung dadurch vorteilhaft weitergebildet werden, dass der Arretiermechanismus ferner aufweist: hydraulische Klemmzylinder, die Klemmabschnitte der Ausrichtvorrichtung klemmen und dadurch eine relative Position zwischen Oberplatte und Unterplatte mittels Klemmung sichern.

Besonders vorteilhaft kann durch das Vorsehen von hydraulischen Klemmzylindern die justierte Relativlage zwischen Werkstück und Maschinentisch gesichert werden. Zudem wird durch eine solche Sicherung mittels Klemmung der Verstellmechanismus während der Bearbeitung des Werkstücks entlastet, so dass bei dem Verstellmechanismus kein Schaden durch die Bearbeitungsprozesse bzw. auch nur eine geringfügige Abnutzung über die Zeit zu erwarten ist.

Weiterhin kann die erfindungsgemäße Ausrichtvorrichtung dadurch vorteilhaft weitergebildet werden, dass die Ausrichtvorrichtung ferner aufweist: eine Klemmspindel, mittels derer ein hydraulischer Druck in den hydraulischen Klemmzylindern des Arretiermechanismus für das Sichern der relativen Position der Oberplatte zur Unterplatte erzeugt werden kann, wobei die Klemmspindel an der der Erzeugung des hydraulischen Drucks gegenüberliegenden Seite ein Eingriffsabschnitt aufweist, an diesem durch Rotation des Eingriffsabschnitts der hydraulische Druck erzeugt werden kann.

Hierdurch kann vorteilhafterweise neben den Spindeln zum Justieren des Werkstücks gegenüber dem Maschinentisch auch die Klemmung entweder automatisiert oder, bei Bedarf, händisch bedient werden.

Eine vorteilhafte Weiterbildung der erfindungsgemäßen Ausrichtvorrichtung besteht ferner darin, dass Klemmleisten, die die Klemmabschnitte aufweisen, und die hydraulischen Klemmzylinder derart in der Ausrichtvorrichtung zueinander angeordnet sind, dass bei einer gelösten Klemmung die Oberplatte nicht von der Unterplatte abgehoben werden kann.

Dies ist insbesondere deswegen von Vorteil, da die Oberplatte der Ausrichtvorrichtung nie, auch nicht bei gelöster Klemmung, abgehoben werden kann und somit ein Herabfallen des Werkstücks aufgrund einer losen Lagerung der Oberplatte auf der Unterplatte ausgeschlossen ist.

Des Weiteren ermöglicht ein solcher Aufbau, dass sich das Werkstück in seiner Lage zum Maschinentisch horizontal befinden kann, auch während des Justiervorganges von Werkstück zu Maschinentisch.

Eine vorteilhafte Weiterbildung der erfindungsgemäßen Ausrichtvorrichtung ist, dass die Ausrichtvorrichtung ferner ein Verstellwerkzeug aufweist, das von einer Arbeitsspindel der Werkzeugmaschine aufgenommen werden kann und mit dem die Spindeln zur Einleitung der mechanischen Kraft zum Verschieben der Oberplatte relativ zu der Unterplatte und die Klemmspindel an ihren Eingriffsabschnitten betätigt werden können.

Das Vorsehen eines Verstellwerkzeugs bietet den Vorteil, dass mittels der Arbeitsspindel der Werkzeugmaschine ein vollständig automatisierter Justiervorgang von Werkstück zu Maschinentisch vollzogen werden kann, ohne dass der Bediener händisch in irgendeiner Art und Weise eingreifen muss.

Eine vorteilhafte Weiterbildung der erfindungsgemäßen Ausrichtvorrichtung besteht darin, dass das Verstellwerkzeug ferner derart eingerichtet ist, einen axialen Ausgleich mittels eines federnden Elements vorzusehen, wenn das Verstellwerkzeug mit einer der Spindeln der Ausrichtvorrichtung im Eingriff ist.

Hierdurch können in vorteilhafter Weise Stöße, die beim in Eingriff bringen von Verstellwerkzeug mit einer der Spindeln der Ausrichtvorrichtung hervorgerufen werden, abgemildert/gedämpft werden.

Zudem kann die erfindungsgemäße Ausrichtvorrichtung dadurch vorteilhaft weitergebildet werden, dass das Verstellwerkzeug ferner dazu eingerichtet ist, ein Drehmoment, welches von der Arbeitsspindel über das Verstellwerkzeug auf die Spindel der Ausrichtvorrichtung übertragen werden soll, einzustellen.

Zudem ist es von Vorteil, das Drehmoment, welches von der Arbeitsspindel der Werkzeugmaschine auf die Spindeln der Ausrichtvorrichtung übertragen werden soll, begrenzen zu können, um durch eine eventuelle Überbelastung Schäden an den Spindeln oder dem Verstell- bzw. Arretiermechanismus der Ausrichtvorrichtung zu vermeiden.

Das erfindungsgemäße Verfahren zur Ausrichtung einer Position eines Werkstücks auf einem Maschinentisch einer numerisch gesteuerten Werkzeugmaschine weist die folgenden Schritte auf: Aufspannen des Werkstücks, welches bearbeitet werden soll, Aufnehmen eines Messtasters in einer Arbeitsspindel der Werkzeugmaschine, Antasten des aufgespannten Werkstücks zur Ermittlung eines Versatzes eines Rundlaufs von dem aufgespannten Werkstück zur Drehachse des Maschinentisches der Werkzeugmaschine, Justieren des Werkstücks gegenüber der Drehachse des Maschinentisches mittels einer der vorgenannten Ausrichtvorrichtungen mit den folgenden Unterschritten: Aufnehmen eines Verstellwerkzeugs in der Arbeitsspindel, Lösen einer Arretierung der Oberplatte zu der Unterplatte mittels des Verstellwerkzeugs, Verschieben der Oberplatte gegenüber der Unterplatte der Ausrichtvorrichtung um den durch den Messtaster ermittelten Versatz des Rundlaufs des Werkstücks zur Drehachse des Maschinentisches, wobei das Verschieben der Oberplatte gegenüber der Unterplatte mittels des Verstellwerkzeugs erfolgt, und Arretieren der justierten Relativposition von Oberplatte zu Unterplatte mittels des Verstellwerkzeugs.

Durch die Verwendung der erfindungsgemäßen Ausrichtvorrichtung konnte auf raumsparende Weise eine Möglichkeit geschaffen werden, einen Rundlaufversatz eines zu bearbeitenden Werkstücks gegenüber der Rotationsachse eines Maschinentisches auszugleichen. Gleichzeitig konnte hierdurch erreicht werden, dass auf hochgenaue Spannmittel wie Ringspann oder dergleichen verzichtet werden kann. Ferner ist es überaus vorteilhaft, dass die erfindungsgemäße Ausrichtvorrichtung für ein breites Spektrum von Bauteilen/Werkstücken verwendet werden kann und somit Anschaffungskosten nur einmal aufzubringen sind anstatt für unterschiedliche Werkstücke unterschiedliche Spannmittel einsetzen zu müssen. Ferner konnte durch die erfindungsgemäße Ausrichtvorrichtung erreicht werden, dass der Ausrichtprozess nun vollautomatisch ohne den Eingriff eines Bedieners erfolgen kann und somit eine signifikant höhere Kontinuität bei den Bearbeitungsergebnissen erreicht werden konnte.

Ferner ermöglicht das Justieren der Ausrichtvorrichtung mittels der Arbeitsspindel der Werkzeugmaschine, dass Verstellergebnisse für jedes Werkstück bzw. Bauteil über die NC-Steuerung protokolliert werden können, was zu einer besseren Nachvollziehbarkeit der Bearbeitung des Werkstücks/Bauteils und der entsprechenden Qualität des Werkstücks/Bauteils führt.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### KURZBESCHREIBUNG DER FIGUREN

Fig. 1 zeigt schematisch eine Ausführungsform der erfindungsgemäßen Ausrichtvorrichtung sowie einen Maschinentisch, eine Aufspannvorrichtung und ein zu bearbeitendes Werkstück;
Fig. 2 zeigt schematisch eine Detailansicht der Ausführungsform der erfindungsgemäßen Ausrichtvorrichtung sowie Bestandteile des Verstellmechanismus und des Arretiermechanismus;
Fig. 3a zeigt im Detail eine Ausführungsform des Verstellmechanismus der erfindungsgemäßen Ausrichtvorrichtung mit keilförmigen Elementen;
Fig. 3b zeigt eine weitere Ausführungsform des Verstellmechanismus der erfindungsgemäßen Ausrichtvorrichtung mit hydraulisch gekoppelten, keilförmigen Elementen;
Fig. 4 zeigt einen Querschnitt einer Ausführungsform des Arretiermechanismus der erfindungsgemäßen Ausrichtvorrichtung;
Fig. 5 zeigt die Ausführungsform der erfindungsgemäßen Ausrichtvorrichtung mit den Eingriffsabschnitten der beiden Spindeln für das Justieren des zu bearbeitenden Werkstücks gegenüber dem Maschinentisch und dem Eingriffsabschnitt der Klemmspindel;
Fig. 6 zeigt eine Ausführungsform eines Verstellwerkzeugs der erfindungsgemäßen Ausrichtvorrichtung, welches mit den Eingriffsabschnitten der Spindeln der erfindungsgemäßen Ausrichtvorrichtung in Eingriff gebracht werden kann;
Fig. 7 zeigt das Verstellwerkzeug im Eingriff mit einer der Spindeln der Ausführungsform der erfindungsgemäßen Ausrichtvorrichtung;
Fig. 8 zeigt schematisch eine Werkzeugmaschine, in der die erfindungsgemäße Ausrichtvorrichtung verwendet werden kann; und
Fig. 9 zeigt ein Ablaufdiagramm eines Ausführungsbeispiels des erfindungsgemäßen Verfahrens zur Ausrichtung einer Position eines Werkstücks auf einem Maschinentisch einer numerisch gesteuerten Werkzeugmaschine.

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

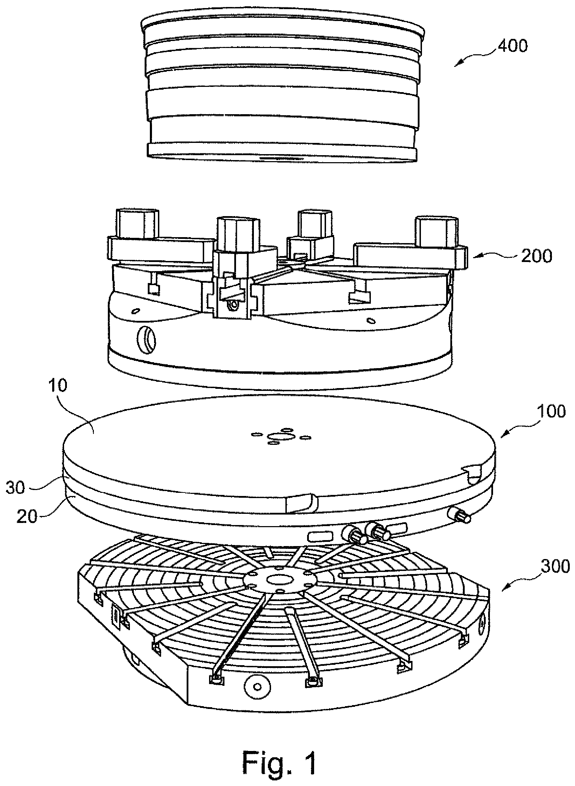

Fig. 1 zeigt schematisch eine Ausführungsform der erfindungsgemäßen Ausrichtvorrichtung 100 sowie einen Maschinentisch 300, eine Aufspannvorrichtung 200 und ein zu bearbeitendes Werkstück 400.

Dabei soll eine Anordnung mit der Ausrichtvorrichtung 100 gezeigt werden, wenn diese für das Justieren des Werkstücks 400 gegenüber dem Maschinentisch 300 verwendet wird.

Die Ausrichtvorrichtung 100 wird zunächst auf dem Maschinentisch 300 montiert, wobei dies über die Unterplatte 20 der Ausrichtvorrichtung 100 geschieht. Ferner ist die Oberplatte 10 der Ausrichtvorrichtung 100 derart eingerichtet, dass sie die Aufspannvorrichtung 200 im Wesentlichen zentriert aufnehmen kann. Hierfür kann die Oberplatte 10 der Ausrichtvorrichtung 100, wie in Fig. 1 gezeigt, Zentrierbohrungen oder ähnlich wirkende Hilfsmittel aufweisen, um die Aufspannvorrichtung 200 im Wesentlichen zentriert aufzunehmen. Die gezeigte Aufspannvorrichtung 200 soll dabei nur als Beispiel dienen und kann durch jede andere Aufspannvorrichtung ersetzt werden.

Das zu bearbeitende Werkstück 400 kann nun fest in der Aufspannvorrichtung 200 aufgespannt werden und kann nun durch den Maschinentisch 300 entsprechend in eine Drehbewegung versetzt werden.

Ferner zeigt Figur 1 den schichtweisen Aufbau der Ausrichtvorrichtung 100, welche neben der Oberplatte 10 und der Unterplatte 20 eine Abdichtung 30 umfasst, welche eine Abdichtung zwischen der Oberplatte 10 und der Unterplatte 20 gewährleistet.

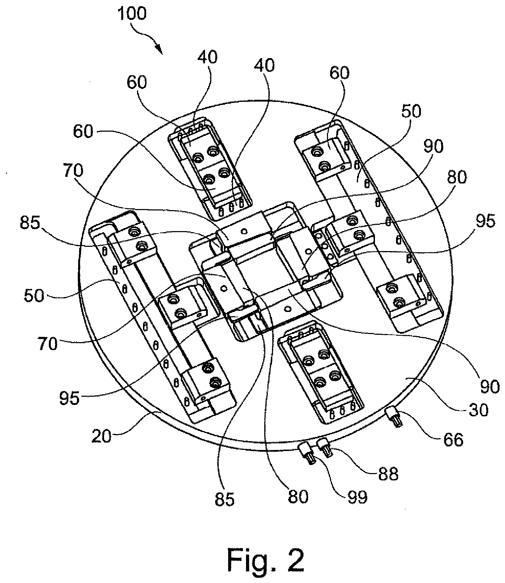

Fig. 2 zeigt schematisch eine Detailansicht der Ausführungsform der erfindungsgemäßen Ausrichtvorrichtung 100 sowie Bestandteile des Verstellmechanismus und des Arretiermechanismus.

Dabei ist die Oberplatte 10 der Ausrichtvorrichtung 100 in dieser Ansicht weggelassen worden, um die innen liegenden Bestandteile der Ausrichtvorrichtung 100 kenntlich zu machen.

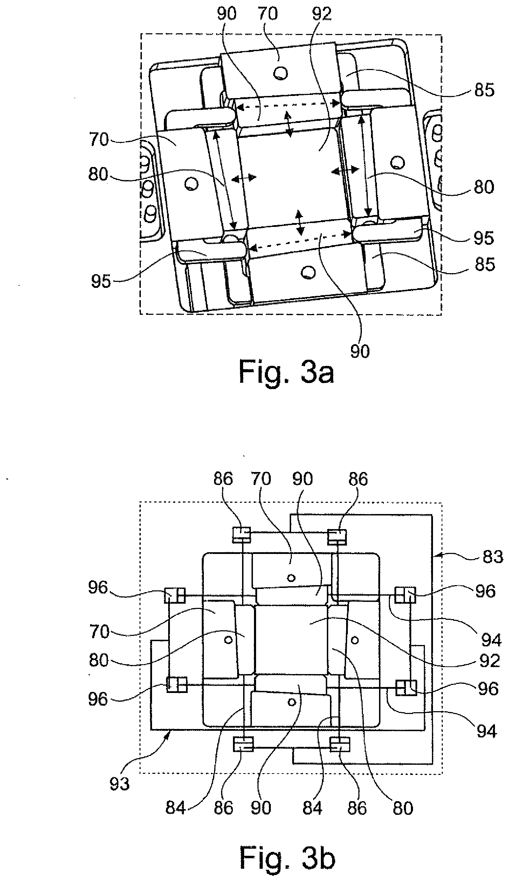

Hierbei sind, neben der Unterplatte 20 und der Abdichtung 30, insbesondere der Verstellmechanismus, welcher keilförmige Elemente 80, 90, Hebelelemente 85, 95 sowie die mit der Unterplatte 20 verbundenen, nicht beweglichen keilförmigen Elemente 70 umfasst, gezeigt. Im Detail wird der Verstellmechanismus anhand von Fig. 3a erläutert.

Zudem zeigt Fig. 2 den Arretiermechanismus, der die relative Lage der Oberplatte 10 zu der Unterplatte 20 sichert. Der Arretiermechanismus umfasst dabei hydraulische Klemmzylinder 60, welche Klemmabschnitte der Ausrichtvorrichtung 100 klemmen und so die relative Lage/Position von Oberplatte 10 zu Unterplatte 20 sichern. Dabei werden die Klemmabschnitte durch Klemmleisten 40, 50 gebildet, wobei diese unterschiedliche Längen aufweisen können und je nach Anwendungsfall unterschiedlich innerhalb der Ausrichtvorrichtung 100 ausgerichtet sein können.

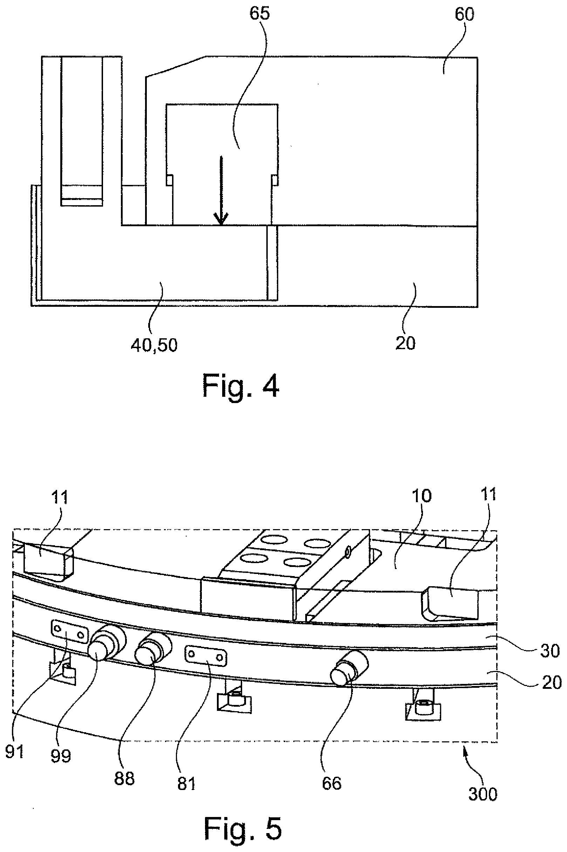

Gleichzeitig ist die Ausrichtvorrichtung 100 derart aufgebaut, dass die hydraulischen Klemmzylinder 60 und die Unterplatte 20 zusammen für die Klemmleisten 40, 50 eine Art Führungsschiene erzeugen, innerhalb dessen sich die Klemmleisten 40, 50 und somit Oberplatte 10 relativ zur Unterplatte 20 in einer Ebene bewegen kann, die im Wesentlichen parallel zu einer Ebene der Unterplatte 20 ist, welche in Kontakt mit dem Maschinentisch 300 ist. Im Detail ist dieser Sachverhalt in Fig. 4 verdeutlicht.

Weiterhin ist in Fig. 2 gezeigt, dass die Unterplatte 20 mehrere Aussparungen aufweist, in denen die Klemmleisten 40, 50, welche mit der Oberplatte 10 fest verbunden sind (z.B. durch Verschraubungen), Platz finden. Ferner sind die Aussparungen der Unterplatte 20 derart ausgeformt, dass die hydraulischen Klemmzylinder 60 die Führungsschiene im Verbund mit den Klemmleisten 40, 50 der Oberplatte 10 bilden können. Dadurch ist ein Führen der Oberplatte 10 gegenüber der Unterplatte 20 möglich.

Zudem ist eine Aussparung im Wesentlichen mittig in der Unterplatte 20 vorgesehen, in welcher der Verstellmechanismus, der im Detail anhand von Fig. 3a erläutert wird, in der Ausrichtvorrichtung 100 untergebracht ist.

Ferner zeigt Fig. 2 schematisch die Anordnung der Spindeln 66, 88, 99 der Ausrichtvorrichtung 100, mittels diesen die Ausrichtvorrichtung 100 bedient werden kann.

Im Detail werden hierbei die Spindeln 88, 99 für die Verstellung der relativen Lage der Oberplatte 10 zu der Unterplatte 20 verwendet. Die Spindeln 88, 99 sind derart aufgebaut, dass sie, außerhalb der Ausrichtvorrichtung 100, durch ein Werkzeug mittels einer Drehbewegung/Rotation bedient werden können, und die Drehbewegung in eine Schubbewegung zur Verstellung des Verstellmechanismus umwandeln.

Ähnlich verhält es sich mit der Spindel/Klemmspindel 66, welche, außerhalb der Ausrichtvorrichtung 100, durch ein Werkzeug mittels einer Drehbewegung/Rotation bedient werden kann, sodass die Klemmspindel 66 einen hydraulischen Druck aufbringt bzw. vermindert, der an die hydraulischen Klemmzylinder 60 weitergeleitet wird und so die Klemmung zwischen der Oberplatte 10 und der Unterplatte 20 erzeugt oder löst. Hierbei kann durch die Klemmspindel 66 ein Druck des hydraulischen Fluides von teilweise bis zu 500 bar erzeugt werden.

Anstelle der Spindeln 66, 88, 99, welche mechanisch bedient werden, könnten aber auch Servomotoren für das Betätigen des Verstellmechanismus und/oder des Arretiermechanismus verwendet werden, so dass die Ausrichtvorrichtung 100 zum großen Teil oder gar vollständig elektrisch bedient/angesteuert werden könnte.

Fig. 3a zeigt im Detail eine Ausführungsform des Verstellmechanismus der erfindungsgemäßen Ausrichtvorrichtung 100 mit keilförmigen Elementen 70, 80, 90.

Im Detail ist dabei gezeigt, wie bei Verschiebung der keilförmigen Elemente 80, 90 ein Block 92 (hier nur angedeutet) in der Mitte des Verstellmechanismus, der mit der Oberplatte 10 der Ausrichtvorrichtung 100 fest verbunden ist, in zwei Richtungen verschoben werden kann. Dies soll durch die Pfeile verdeutlicht werden, wobei die Pfeile mit durchgängiger Linie zusammengehören und die Pfeile mit gepunkteter Linie zusammen gehören. Die längeren Pfeile stellen dabei die Verschiebung der keilförmigen Elemente 80, 90 gegenüber den keilförmigen, gegenüber der Unterplatte 20 unbeweglichen Elementen 70 dar, welche durch die Verstellung der Spindeln 88, 99 hervorgerufen wird.

Des Weiteren soll durch die Längenverhältnisse verdeutlicht werden, dass bei einer Verschiebung der keilförmigen Elemente 80, 90 in Richtung der längeren Pfeile, eine von dem Keilwinkel der keilförmigen Elemente 70, 80, 90 abhängige Verschiebung des Blocks, der mit der Oberplatte 10 fest verbunden ist, erfolgt.

Wird nun, beispielsweise, die Spindel 88 durch eine Drehbewegung mittels eines Werkzeugs verstellt, so verschieben sich die keilförmigen Elemente 80. Hierbei ist der gezeigte Aufbau von Vorteil, da nur an einem der keilförmigen Elemente 80 die Bewegung durch die Spindel 88 eingeleitet werden braucht, da mittels der Hebelelemente 85 die keilförmigen Elemente 80 so miteinander gekoppelt sind, dass die Verschiebungsbewegung des einen keilförmigen Elements 80 unmittelbar auf das zweite keilförmige Element 80 übertragen wird. Durch diese Kopplung, mittels derer die Hebelelemente 85 über die keilförmigen Elemente 80 miteinander spielfrei "verspannt" sind, wird eine unmittelbare Krafteinleitung und eine daraus resultierende direkte Bewegungsübertragung sichergestellt.

Hierzu sind die Hebelelemente 85 U-förmig ausgebildet und im Wesentlichen mittig an ihrem Zwischenglied mit den keilförmigen Elementen 70 durch eine drehbare Lagerung, welche an den keilförmigen Elementen 70 durch die Bohrung verdeutlicht sein soll, verbunden. Es sei an dieser Stelle noch einmal darauf hingewiesen, dass die keilförmigen Elemente 70 gegenüber der Unterplatte 20 unbeweglich/unverschiebbar sind.

Da der Aufbau und das Zusammenspiel von keilförmigen Elementen 90, 70, den Hebelelementen 95 und der Spindel 99 im Wesentlich gleich zu dem oben genannten Zusammenspiel aus keilförmigen Elementen 80, 70, den Hebelelementen 85 und der Spindel 88 ist, lediglich in ihrer Wirkungsrichtung zum Verschieben des Blocks und der Oberplatte 10 unterscheiden sie sich, wird auf eine wiederholte Beschreibung des Verstellmechanismus für die zweite Richtung verzichtet.

Ein erheblicher Vorteil des Aufbaus des Verstellmechanismus mit den paarweisen, keilförmigen Elementen 80, 70 und 90, 70 liegt zudem darin, dass der Block 92 (in Fig. 3a nur angedeutet), welcher fest mit der Oberplatte 10 verbunden ist und zu den Seiten stets in Kontakt mit den entsprechenden keilförmigen Elementen 80, 90 ist, sowohl vor, während und nach dem Verstellen/Justieren spielfrei zwischen den Paaren der keilförmigen Elementen 80, 70 und den Paaren der keilförmigen Elemente 90, 70 gelagert ist. Dies ermöglicht ein überaus präzises Justieren des Werkstücks 400 gegenüber dem Maschinentisch 300.

Es sei an dieser Stelle darauf hingewiesen, dass neben dem Aufbau des Verstellmechanismus, wie in Fig. 3a gezeigt, mit den Spindeln 88, 99 auch ein gleichartig wirkender Verstellmechanismus vorgesehen werden kann, z.B. eine hydraulisch zu bedienende Kopplung oder dergleichen (siehe hierzu Fig. 3b).

Fig. 3b zeigt eine weitere Ausführungsform des Verstellmechanismus der erfindungsgemäßen Ausrichtvorrichtung 100 mit hydraulisch gekoppelten, keilförmigen Elementen 80, 90.

Dabei können anstelle der Hebelelemente 85, 95 auch vier Hydraulikzylinder 86, 96 (in einen jeweiligen Kreislauf 83, 93 gekoppelt) eine spielfreie Justierung der Oberplatte 10 gewährleisten, indem die keilförmigen Elemente 80, 90 durch die über den jeweiligen hydraulischen Kreislauf 83, 93 gekoppelten Hydraulikzylinder 86, 96 gegen die keilförmigen Elemente 70 gedrückt werden. Da dies auch im justierten Zustand aufrechterhalten werden kann, ist so stets ein (vorgespannter) Kontakt zwischen den keilförmigen Elementen 80, 90, den keilförmigen Elementen 70 und dem Block 92 gewährleistet.

Ein geschlossener Ölkreislauf 83, 93 für jede Justierrichtung der Oberplatte 10 sorgt dabei für den vorgespannten Kontakt und für eine spielfreie Übertragung der Verschiebebewegung zwischen den einzelnen keilförmigen Elementen 80 bzw. zwischen den einzelnen keilförmigen Elementen 90. Ferner werden Kolbenstangen 84, 94 der jeweiligen Hydraulikzylinder 86, 96 durch den gemeinsamen, geschlossenen Ölkreislauf 83, 93 entsprechend gegen die keilförmigen Elemente 80, 90 gedrückt, so dass auch an der Schnittstelle Kolbenstange 84, 94 zu keilförmigem Element 80, 90 kein mechanisches Spiel auftreten kann.

Die Verstellung der keilförmigen Elemente 80, 90 kann wiederum über die Spindeln 88, 99 und das Verstellwerkzeug 110 erfolgen.

Fig. 4 zeigt einen Querschnitt einer Ausführungsform des Arretiermechanismus der erfindungsgemäßen Ausrichtvorrichtung 100.

Hierbei ist insbesondere gezeigt, wie der hydraulische Klemmzylinder 60 mit der Unterplatte 20 eine Führung erzeugt, innerhalb dieser eine Klemmleiste 40, 50 geführt wird. Hierfür sind Aussparungen/Vertiefungen in der Unterplatte 20 vorgesehen, in der die Klemmleiste 40, 50 angeordnet ist. Wird nun, wie in Fig. 4 gezeigt, von oberhalb ein hydraulischer Klemmzylinder 60 auf die Unterplatte 20 montiert, so wird die Klemmleiste 40, 50 in der Aussparung der Unterplatte 20 gegenüber dem Herausnehmen/-heben gesichert. Dies ist insbesondere daher vorteilhaft, da bei gelöster Klemmung die Oberplatte 10, die mit den Klemmleisten 40, 50 fest verbunden ist, nicht von der Unterplatte 20 gelöst werden kann. Dies ist nicht nur hinsichtlich eines möglichst breiten Anwendungsgebiets für die Ausrichtvorrichtung 100 von Vorteil (das Werkstück 400 kann gegenüber dem Maschinentisch 300 diverse Lagen, horizontal oder vertikal, einnehmen), sondern insbesondere auch im Hinblick auf sicherheitstechnische Aspekte bzw. Funktionssicherheit der Ausrichtvorrichtung 100 von Vorteil.

Zudem zeigt Fig. 4, dass jeder hydraulische Klemmzylinder 60 über ein oder mehrere hydraulische Klemmkolben 65 verfügt, die mittels des durch die Klemmspindel 66 aufgebrachten hydraulischen Druckes aus dem hydraulischen Klemmzylinder 60 herausgefahren werden können und somit die Klemmung zwischen der Unterplatte 20 und den mit der Oberplatte 10 (hier nicht gezeigt) verbundenen Klemmleisten 40, 50 erzeugt.

Fig. 5 zeigt die Ausführungsform der erfindungsgemäßen Ausrichtvorrichtung 100 mit den Eingriffsabschnitten der beiden Spindeln 88, 99 für das Justieren des zu bearbeitenden Werkstücks 400 gegenüber dem Maschinentisch 300 und dem Eingriffsabschnitt der Klemmspindel 66.

Wie gezeigt, kann es beispielsweise vorteilhaft sein, wenn die Oberplatte 10 über Aussparungen 11 verfügt, mittels dieser ein Messtaster (hier nicht gezeigt) die Lage/Position der Oberplatte 10 zum Maschinentisch 300 oder eines anderen Referenzobjektes ermitteln kann, um dadurch die Justierung des Werkstücks 400, welche mittels der Spindeln 88, 99 durchgeführt wurde, gegenüber dem Maschinentisch 300 nachzuprüfen. Kann hierbei festgestellt werden, dass der Rundlaufversatz des Werkstücks 400 gegenüber dem Maschinentisch 300 im Wesentlichen beseitigt wurde, kann mittels der Klemmspindel 66 die relative Lage von Oberplatte 10 zur Unterplatte 20 wieder fixiert werden.

Die Aussparungen 11 könnten jedoch auch derart eingerichtet sein (z.B. mittels geeigneter Reflektoren), dass ein optisches Messsystem, zum Beispiel ein LaserInterferometer oder dergleichen, die relative Lage der Oberplatte 10 zur Unterplatte 20 während der Verstellung mittels der Spindeln 88, 99 überwacht.

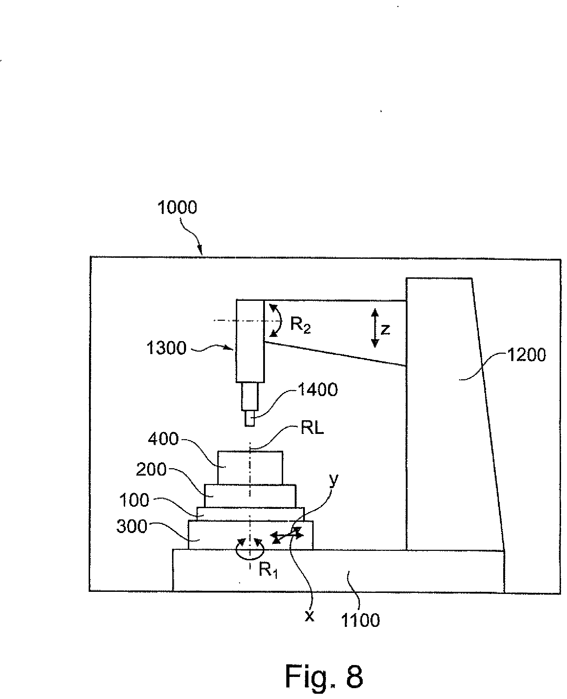

Weiterhin ist in Fig. 5 beispielhaft gezeigt, dass die Ausrichtvorrichtung 100 auch über digitale Wegmessanzeigen 81, 91 verfügen könnte, mittels dieser ein Bediener der Werkzeugmaschine 1000 (hier nicht gezeigt; siehe dafür Fig. 8) nachvollziehen und auch visuell nachprüfen kann, um wieviel Mikrometer/Millimeter die relative Lage von Oberplatte 10 zur Unterplatte 20 verändert wurde. Jedoch könnte auch ein analoges Wegmesssystem bzw. analoge Wegmessanzeigen anstatt der digitalen Wegmessanzeigen 81, 91 denkbar sein. Zudem könnten die Anzeigen, insbesondere die digitalen Wegmessanzeigen auch außerhalb des Bearbeitungsraumes der Werkzeugmaschine 1000 angeordnet sein, damit der Bediener diese leichter ablesen kann.

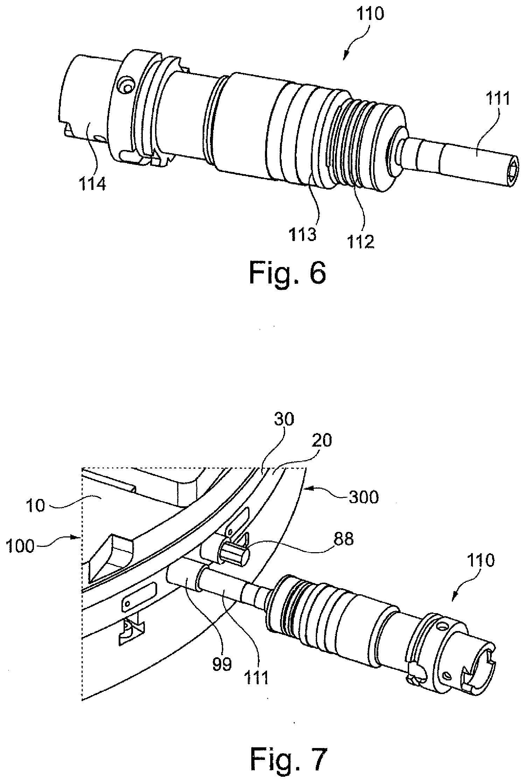

Fig. 6 zeigt eine Ausführungsform eines Verstellwerkzeugs 110 der erfindungsgemäßen Ausrichtvorrichtung 100, welches mit den Eingriffsabschnitten der Spindeln 66, 88, 99 der erfindungsgemäßen Ausrichtvorrichtung 100 in Eingriff gebracht werden kann.

Vorteilhafterweise ist das Verstellwerkzeug 110 derart eingerichtet, dass es von einer Arbeitsspindel 1300 (hier nicht gezeigt, siehe Fig. 8) aufgenommen werden kann. Hierfür weist das Verstellwerkzeug 110 einen entsprechenden Aufnahmeabschnitt 114 auf, der beispielsweise als genormter Hohlschaftkegel ausgeführt sein kann. Jedoch können auch alle anderen bekannten Aufnahmesysteme (z.B. Steilkegel) als Aufnahmeabschnitt 114 verwendet werden, je nach dem, über welches System die Arbeitsspindel 1300 verfügt.

Zudem weist das Verstellwerkzeug 110 einen Werkzeugaufsatz 111 auf, der mit dem Eingriffsabschnitt der Spindeln 66, 88, 99 in Eingriff gebracht werden kann. Hierbei kann die Form der Eingriffsabschnitte der Spindeln 66, 88, 99 und in entsprechender Weise des Werkzeugaufsatzes 111 beispielsweise zwischen einem einfachen Vierkant und einem sehr spezifisch strukturierten Vielkant/Vielzahn ausgeführt sein. Weitere Formen, eventuell auch genormte Steckverbindungen wie zum Beispiel ein Innensechsrund ("Torx") sind aber ebenso denkbar.

Zudem kann das Verstellwerkzeug 110 über einen Abschnitt 112 für einen axialen Ausgleich verfügen. Dieser ist dann insbesondere von Vorteil, wenn das Verstellwerkzeug 110 mit den Eingriffsabschnitten der Spindeln 66, 88, 99 mit Hilfe der Arbeitsspindel 1300 in Eingriff gebracht wird und dabei zwangsläufig auftretende Stöße abgemildert werden, um weder die Ausrichtvorrichtung 100, noch das Verstellwerkzeug 110 oder gar die Arbeitsspindel 1300 zu beschädigen. Hierbei kann ein federndes und/oder dämpfendes Element für den Abschnitt 112 von Vorteil sein.

Weiterhin weist das Verstellwerkzeug 110 vorteilhafterweise einen Drehmomentbegrenzungsabschnitt 113 auf, mittels diesem das Drehmoment von der Arbeitsspindel 1300, das auf die Spindeln 66, 88, 99 übertragen werden soll, begrenzt werden kann. Hierdurch können Beschädigungen der Spindeln 66, 88, 99 durch ein zu hohes Drehmoment ausgeschlossen werden. Auch kann die Begrenzung des Drehmoments für den Verstell- und/oder Arretiermechanismus von Vorteil sein, um Schäden der entsprechenden Mechanismen zu vermeiden.

Fig. 7 zeigt das Verstellwerkzeug 110 im Eingriff mit einer der Spindeln 88, 99 der Ausführungsform der erfindungsgemäßen Ausrichtvorrichtung 100.

Hierdurch soll gezeigt werden, wie das Verstellwerkzeug 110 an die Ausrichtvorrichtung 100 herangeführt und mit einer der Spindeln 88, 99 (hier ist es die Spindel 99) in Eingriff gebracht wird. Durch Aufbringen eines Drehmomentes durch die Arbeitsspindel 1300 der Werkzeugmaschine 1000 (beide hier nicht gezeigt; siehe hierfür Fig. 8) kann die Spindel 99 der Ausrichtvorrichtung 100 verstellt und somit das Werkstück 400, welches durch die Aufspannvorrichtung 200 mit der Oberplatte 10 der Ausrichtvorrichtung 200 verbunden ist, gegenüber dem Maschinentisch 300 einjustiert werden, um einen eventuell vorhandenen Rundlaufversatz des Werkstücks 400 zu beseitigen.

Fig. 8 zeigt schematisch eine Werkzeugmaschine 1000, in der die erfindungsgemäße Ausrichtvorrichtung 100 verwendet werden kann.

Bei der gezeigten Werkzeugmaschine 1000 handelt es sich um eine Fräs-DrehMaschine, also eine Kombination aus einer fräsenden Werkzeugmaschine und einer Drehmaschine. Hierbei wird im Wesentlichen die Struktur einer Werkzeugmaschine für eine fräsende Bearbeitung beibehalten, und der Maschinentisch 300 mit einer Funktion einer Drehspindel einer Drehmaschine versehen.

Die gezeigte Werkzeugmaschine 1000 weist neben einem Maschinenbett 1100, einem Maschinenständer 1200, der Arbeitsspindel 1300 und ein von der Arbeitsspindel 1300 aufgenommenes Bearbeitungswerkzeug 1400 den in Fig. 1 gezeigten Aufbau von Maschinentisch 300, Ausrichtvorrichtung 100, Aufspannvorrichtung 200 und Werkstück 400 auf.

Dabei weist beispielhaft der Maschinentisch 300, neben translatorischen Achsen in X- und Y-Richtung, auch eine Drehachse R₁ auf, um diese der Maschinentisch 300 rotiert und so das zu bearbeitende Werkstück 400 rotatorisch für die Bearbeitung mit dem Bearbeitungswerkzeug 1400 antreibt.

Weiterhin ist beispielhaft eine Rundlaufachse RL des zu bearbeitenden Werkstücks 400 gezeigt, um welche im Idealfall das zu bearbeitende Werkstück 400 durch das Antreiben mittels des Maschinentisches 300 rotieren sollte. Dies kann aber eben nur der Fall sein, wenn die Drehachse R₁ des Maschinentisches 300 und die Rundlaufachse RL des Werkstücks 400 koaxial zueinander sind.

Damit das im Wesentlichen auch erreicht werden kann, wird die Ausrichtvorrichtung 100 zwischen Maschinentisch 300 und Werkstück 400 vorgesehen. Mit ihrer Hilfe kann ein Versatz zwischen der Rundlaufachse RL des Werkstücks 400 und der Drehachse R₁ des Maschinentisches 300 durch Justieren beseitigt werden und das Werkstück 400 kann für die Bearbeitung im Wesentlichen um seine Rundlaufachse RL drehend angetrieben werden.

Neben den bereits erwähnten translatorischen Achsen in X- und Y-Richtung kann die Werkzeugmaschine weiterhin beispielsweise am Werkzeugständer 1200 eine translatorische Achse in Z-Richtung aufweisen. Ferner kann auch die Arbeitsspindel 1300 gegenüber dem Maschinenständer um eine Schwenkachse R₂, die senkrecht zu der Hauptantriebsachse der Arbeitsspindel 1300 angeordnet ist, drehbar gelagert sein.

Die genannte Verteilung der translatorischen Achsen (X, Y, Z) und der Schwenkachse R2 soll nur Beispielcharakter besitzen und sollte nicht als einschränkend aufgefasst werden. Die Werkzeugmaschine 1000 kann darüber hinaus weitere Zustellachsen aufweisen; beispielsweise könnte der Maschinentisch 300 über eine zusätzliche Schwenkachse verfügen.

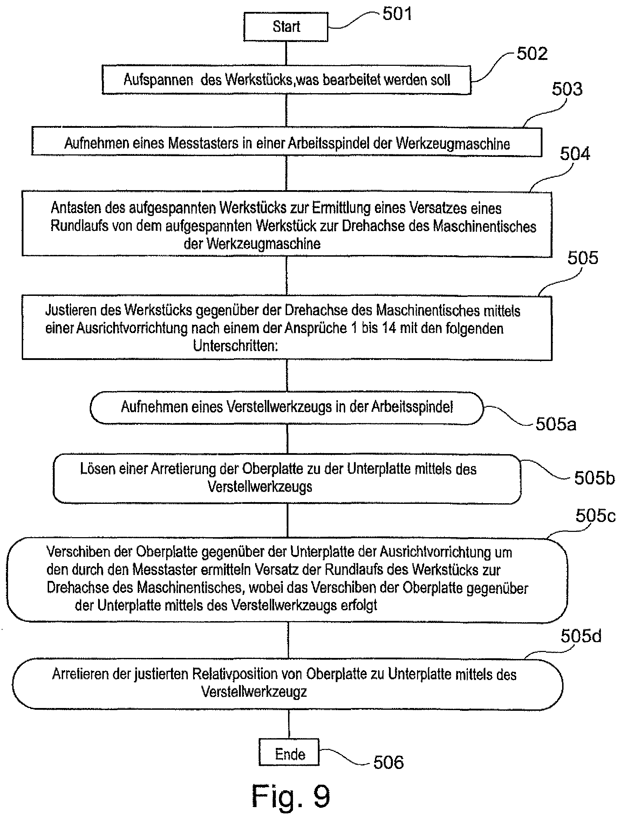

Fig. 9 zeigt ein Ablaufdiagramm eines Ausführungsbeispiels des erfindungsgemäßen Verfahrens zur Ausrichtung einer Position eines Werkstücks 400 auf einem Maschinentisch 300 einer numerisch gesteuerten Werkzeugmaschine 1000.

Dabei weist das Verfahren die nachfolgend genannten Schritte auf.

Zu Beginn wird im Schritt S02 das Werkstück 400, welches bearbeitet werden soll, aufgespannt. Dabei wird das Werkstück 400 durch die Aufspannvorrichtung 200 gegenüber dem Maschinentisch 300 fixiert und bereits grob vorzentriert (Rundlaufachse RL des Werkstücks 400 und Drehachse R₁ des Maschinentisches 300 sind bis auf wenige Zehntel Millimeter koaxial).

Im nächsten Schritt S03 erfolgt das Aufnehmen eines Messtasters (oder einer ähnliche bzw. anders geartete Messvorrichtung) in der Arbeitsspindel 1300 der Werkzeugmaschine 1000. Hierdurch kann die derzeitige relative Lage von Werkstück 400 gegenüber dem Maschinentisch 300 erfasst werden. Es sei an dieser Stelle darauf hingewiesen, dass neben taktilen Messvorrichtungen aber auch optische Messvorrichtungen, z.B. auf Basis von Laser-Interferometern, zur Anwendung kommen können.

Im Schritt S04 wird nun das aufgespannte Werkstück 400 angetastet, um einen eventuellen Versatz des Rundlaufs (Rundlaufachse RL) von dem aufgespannten Werkstück 400 zur Drehachse R₁ des Maschinentisches 300 der Werkzeugmaschine 1000 zu ermitteln.

Hierbei können verschiedene Ablaufprozeduren zur Ermittlung des Versatzes angewendet werden, je nach der Beschaffenheit des vorliegenden Werkstücks 400 und/oder der gewünschten Genauigkeit der koaxialen Ausrichtung von Rundlaufachse RL des Werkstücks 400 zur Drehachse R₁ des Maschinentisches 300.

Im darauf folgenden Schritt S05 wird das Werkstück 400 gegenüber der Drehachse R₁ des Maschinentisches 300 mittels der Ausrichtvorrichtung 100 einjustiert. Hierbei werden nun die folgenden Unterschritte für die Justierung durchgeführt:
Im Schritt S05a wird das Verstellwerkzeug 110 in der Arbeitsspindel 1300 der Werkzeugmaschine 1000 aufgenommen, um die Spindeln 66, 88, 99 der Ausrichtvorrichtung 100 zu bedienen.

Im darauf folgenden Unterschritt S05b erfolgt ein Lösen der Arretierung der Oberplatte 10 zu der Unterplatte 20 mittels des Verstellwerkzeugs 110, indem die Klemmspindel 66 durch das Verstellwerkzeug 110 bedient wird in der Art, dass der hydraulische Druck in den Druckzylindern 60 reduziert wird und dadurch die Klemmwirkung zwischen hydraulischen Klemmkolben 65, den Klemmleisten 40, 50 und der Unterplatte 20 aufgehoben wird.

Nun erfolgt im Unterschritt S05c das Verschieben der Oberplatte 10 gegenüber der Unterplatte 20 der Ausrichtvorrichtung 100 um den durch den Messtaster ermittelten Versatz des Rundlaufs (Rundlaufachse RL) des Werkstücks 400 zur Drehachse R₁ des Maschinentisches 300 um den Versatz weitestgehend zu beseitigen.

Dabei erfolgt das Verschieben der Oberplatte 10 gegenüber der Unterplatte 20 mittels des Verstellwerkzeugs 110, indem die Arbeitsspindel 1300 das Verstellwerkzeug 110 mit einer oder beiden Spindeln 88, 99 der Ausrichtvorrichtung 100 nacheinander in Eingriff bringt und entsprechend eine Verstellung dieser Spindeln 88, 99 durchführt, sodass über den Verstellmechanismus die relative Lage der Oberplatte 10 zu der Unterplatte 20 verändert wird, um den Versatz zu beseitigen.

Danach erfolgt im Schritt S05d das Arretieren der justierten Relativposition von Oberplatte 10 zu Unterplatte 20 mittels des Verstellwerkzeugs 110, indem die Arbeitsspindel 1300 das Verstellwerkzeug 110 wieder mit der Klemmspindel 66 der Ausrichtvorrichtung 100 in Eingriff bringt und derart verstellt, dass der hydraulische Druck in den hydraulischen Klemmblöcken 60 wieder signifikant erhöht wird, was wiederum eine Klemmwirkung zwischen den hydraulischen Klemmkolben 65, den Klemmleisten 40, 50 und der Unterplatte 20 zur Folge hat.

Hierdurch kann die nun einjustierte Relativlage von Werkstück 400 zu Maschinentisch 300 gesichert werden und ein Bearbeiten des Werkstücks 400 mit dem Bearbeitungswerkzeug 1400 kann erfolgen.

Vorstehend wurden Beispiele bzw. Ausführungsbeispiele der vorliegenden Erfindung sowie deren Vorteile detailliert unter Bezugnahme auf die beigefügten Figuren beschrieben.

### LISTE DER BEZUGSZEICHEN

- **10**: Oberplatte
- **20**: Unterplatte
- **30**: Abdichtung zwischen Ober- und Unterplatte
- **40**: Klemmleiste kurz
- **50**: Klemmleiste lang
- **60**: hydraulischer Klemmzylinder
- **65**: hydraulischer Klemmkolben
- **66**: Klemmspindel
- **70**: keilförmiges, gegenüber Unterplatte 20 nicht bewegliches Element
- **80**: keilförmiges Element
- **81**: digitale Wegmessanzeige
- **83**: geschlossener hydraulischer Kreislauf (Ölkreislauf)
- **84**: Kolbenstange
- **85**: Hebelelement
- **86**: Hydraulikzylinder
- **88**: Spindel für Justierung
- **90**: keilförmiges Element
- **91**: digitale Wegmessanzeige
- **92**: Block
- **93**: geschlossener hydraulischer Kreislauf (Ölkreislauf)
- **94**: Kolbenstange
- **95**: Hebelelement
- **96**: Hydraulikzylinder
- **99**: Spindel für Justierung
- **100**: Ausrichtvorrichtung
- **110**: Verstellwerkzeug
- **111**: Werkzeugaufsatz
- **112**: Abschnitt für axialen Ausgleich
- **113**: Drehmomentbegrenzungsabschnitt
- **114**: Aufnahmeabschnitt
- **200**: Aufspannvorrichtung
- **300**: Maschinentisch
- **400**: Werkstück
- **1000**: Werkzeugmaschine
- **1100**: Maschinenbett
- **1200**: Maschinenständer
- **1300**: Arbeitsspindel
- **1400**: Bearbeitungswerkzeug

## Patentansprüche

1. Ausrichtvorrichtung (100) zum Justieren eines Werkstücks auf einem Maschinentisch (300) einer numerisch gesteuerten Werkzeugmaschine (1000), aufweisend:
eine Unterplatte (20), die auf dem Maschinentisch (300) der Werkzeugmaschine (1000) montierbar ist,
eine auf der Unterplatte (20) beweglich angeordnete Oberplatte (10), auf deren Oberseite ein Werkstückträger montierbar ist,
ein Verstellmechanismus, der zwischen der Unterplatte (20) und der Oberplatte (10) zum Justieren der relativen Lage der Oberplatte (10) zu der Unterplatte (20) ausgebildet ist,
und
ein Arretiermechanismus, um die relative Lage der Oberplatte (10) zu der Unterplatte (20) zu sichern.
**dadurch gekennzeichnet, dass**
der Verstellmechanismus zwischen der Unterplatte (20) und der Oberplatte (10) derart ausgebildet ist, dass durch Einleiten einer mechanischen Kraft keilförmige Elemente (70, 80, 90) derart zueinander verschoben werden, dass die Oberplatte (10) relativ gegenüber der Unterplatte (20) und im Wesentlichen parallel zu einer Ebene des Maschinentisches (300), auf der die Unterplatte (20) montiert ist, verschoben wird, wobei
zwei sich gegenüberliegende Paare von keilförmigen Elementen (70, 80, 90) die Oberplatte (10) in eine Richtung relativ gegenüber der Unterplatte (20) verschieben, sodass die Oberplatte (10) in zwei senkrecht zueinanderstehenden Richtungen gegenüber der Unterplatte (20) verschoben werden kann.

2. Ausrichtvorrichtung (100) nach Anspruch 1, wobei
der Verstellmechanismus ferner derart ausgebildet ist, dass ein keilförmiges Element (70, 80, 90) eines jeden Paares relativ zu dem anderen keilförmigen Element (70, 80, 90) des jeweiligen Paares verschiebbar ist, wobei die verschiebbaren, keilförmigen Elemente (70, 80, 90), die gemeinsam die Verschiebung der Oberplatte (10) in eine Richtung bewirken, mittels eines Hebelmechanismus (95) miteinander gekoppelt sind.

3. Ausrichtvorrichtung (100) nach Anspruch 2, wobei
der Hebelmechanismus derart ausgebildet ist, dass die verschiebbaren, keilförmigen Elemente (70, 80, 90), die gemeinsam die Verschiebung der Oberplatte (10) in eine Richtung bewirken, an ihren jeweiligen Enden in ihrer Verschieberichtung ein gemeinsames Hebelelement (95) aufweisen, das in einem der Paare von keilförmigen Elementen (70, 80, 90), die die Verschiebung der Oberplatte (10) in die senkrecht dazu stehende Richtung bewirken, drehbar gelagert ist und dadurch eine Verschiebebewegung des einen verschiebbaren, keilförmigen Elementes (70, 80, 90) auf das andere verschiebbare, keilförmige Element (70, 80, 90) für die Verschiebung der Oberplatte (10) in eine Richtung übertragen werden kann.

4. Ausrichtvorrichtung (100) nach Anspruch 3, wobei
das Zusammenwirken der Hebelelemente (95) mit den entsprechenden verschiebbaren, keilförmigen Elementen (70, 80, 90), die eine Verschiebung der Oberplatte (10) in eine Richtung bewirken, mittels einer Verstelleinrichtung spielfrei eingestellt werden kann.

5. Ausrichtvorrichtung (100) nach einem der Ansprüche 1 bis 4, wobei
die Ausrichtvorrichtung (100) ferner aufweist:
zwei Spindeln (88, 99) zur Einleitung einer mechanischen Kraft zum Verschieben der Oberplatte (10) relativ zu der Unterplatte (20), wobei eine erste Spindel (88; 99)der beiden Spindeln (88, 99) für eine erste Verschieberichtung der Oberplatte (10) und eine zweite Spindel (99; 88) der beiden Spindeln (88, 99) für eine zweite Verschieberichtung senkrecht zu der ersten Verschieberichtung vorgesehen ist.

6. Ausrichtvorrichtung (100) nach Anspruch 5, wobei
jede der beiden Spindeln (88, 99) an der den keilförmigen Elementen (70, 80, 90) gegenüberliegenden Seite einen Eingriffsabschnitt aufweist, an dem durch Rotation des Eingriffsabschnitts die Verschiebung der Oberplatte (10) relativ zur Unterplatte (20) bewirkt werden kann.

7. Ausrichtvorrichtung (100) nach einem der Ansprüche 1 bis 6, wobei
der Arretiermechanismus ferner aufweist:
hydraulische Klemmzylinder (60), die Klemmabschnitte der Ausrichtvorrichtung (100) klemmen und dadurch eine relative Position zwischen Oberplatte (10) und Unterplatte (20) mittels Klemmung sichern.

8. Ausrichtvorrichtung (100) nach Anspruch 7, wobei
die Ausrichtvorrichtung (100) ferner aufweist:
eine Klemmspindel (66), mittels derer ein hydraulischer Druck in den hydraulischen Klemmzylindern (60) des Arretiermechanismus für das Sichern der relativen Position der Oberplatte(10) zur Unterplatte (20) erzeugt werden kann, wobei
die Klemmspindel (66) an der der Erzeugung des hydraulischen Drucks gegenüberliegenden Seite ein Eingriffsabschnitt aufweist, an diesem durch Rotation des Eingriffsabschnitts der hydraulische Druck erzeugt werden kann.

9. Ausrichtvorrichtung (100) nach Anspruch 7 oder 8, wobei
Klemmleisten (40, 50), die die Klemmabschnitte aufweisen, und die hydraulischen Klemmzylinder (60) derart in der Ausrichtvorrichtung (100) zueinander angeordnet sind, dass bei einer gelösten Klemmung die Oberplatte (10) nicht von der Unterplatte (20) abgehoben werden kann.

10. Ausrichtvorrichtung (100) nach Anspruch 9, wobei
die Ausrichtvorrichtung (100) ferner ein Verstellwerkzeug (110) aufweist, das von einer Arbeitsspindel (1300) der Werkzeugmaschine (1000) aufgenommen werden kann und mit dem die Spindeln (88, 99) zur Einleitung der mechanischen Kraft zum Verschieben der Oberplatte (10) relativ zu der Unterplatte (20) und die Klemmspindel (66) an ihren Eingriffsabschnitten betätigt werden können.

11. Ausrichtvorrichtung (100) nach Anspruch 10, wobei
das Verstellwerkzeug (110) ferner derart eingerichtet ist, einen axialen Ausgleich mittels eines federnden Elements vorzusehen, wenn das Verstellwerkzeug (110) mit einer der Spindeln (66, 88, 99) der Ausrichtvorrichtung (100) im Eingriff ist.

12. Ausrichtvorrichtung (100) nach Anspruch 10 oder 11, wobei
das Verstellwerkzeug (110) ferner dazu eingerichtet ist, ein Drehmoment, welches von der Arbeitsspindel (1300) über das Verstellwerkzeug (110) auf die Spindel (66, 88, 99) der Ausrichtvorrichtung (100) übertragen werden soll, einzustellen.

13. Verfahren zur Ausrichtung einer Position eines Werkstücks (400) auf einem Maschinentisch (300) einer numerisch gesteuerten Werkzeugmaschine (1000) mit den folgenden Schritten:
- Aufspannen des Werkstücks (400), welches bearbeitet werden soll,
- Aufnehmen eines Messtasters in einer Arbeitsspindel (1300) der Werkzeugmaschine (1000),
- Antasten des aufgespannten Werkstücks (400) zur Ermittlung eines Versatzes eines Rundlaufs von dem aufgespannten Werkstück (400) zur Drehachse des Maschinentisches (300) der Werkzeugmaschine (1000),
- Justieren des Werkstücks (400) gegenüber der Drehachse des Maschinentisches (300) mittels einer Ausrichtvorrichtung (100) nach einem der Ansprüche 1 bis 12 mit den folgenden Unterschritten:
∘ Aufnehmen eines Verstellwerkzeugs (110) in der Arbeitsspindel (1300),
∘ Lösen einer Arretierung der Oberplatte (10) zu der Unterplatte (20) mittels des Verstellwerkzeugs (110),
∘ Verschieben der Oberplatte (10) gegenüber der Unterplatte (20) der Ausrichtvorrichtung (100) um den durch den Messtaster ermittelten Versatz des Rundlaufs des Werkstücks (400) zur Drehachse des Maschinentisches (300), wobei das Verschieben der Oberplatte (10) gegenüber der Unterplatte (20) mittels des Verstellwerkzeugs (110) erfolgt, und
∘ Arretieren der justierten Relativposition von Oberplatte (10) zu Unterplatte (20) mittels des Verstellwerkzeugs (110).

## Claims

1. An aligning device (100) for adjusting a workpiece on a machine table (300) of a numerically controlled machine tool (1000), comprising:
a lower plate (20) which can be mounted on the machine table (300) of the machine tool (1000),
an upper plate (10) which is arranged movably on the lower plate (20) and on the upper side of which a workpiece carrier can be mounted,
an adjusting mechanism formed between the lower plate (20) and the upper plate (10) for adjusting the relative position of the upper plate (10) to the lower plate (20), and
a locking mechanism for locking the relative position of the upper plate (10) to the lower plate (20).
**characterized in that**
the adjusting mechanism is formed between the lower plate (20) and the upper plate (10) such that wedge-shaped members (70, 80, 90) are displaced relative to each other by introducing a mechanical force such that the upper plate (10) is displaced relative to the lower plate (20) and substantially parallel to a plane of the machine table (300) on which the lower plate (20) is mounted, wherein
two opposing pairs of wedge-shaped members (70, 80, 90) displace the upper plate (10) in one direction relative to the lower plate (20) so that the upper plate (10) can be displaced in two directions perpendicular to each other relative to the lower plate (20).

2. The alignment device (100) according to claim 1, wherein
the adjusting mechanism is further formed such that one wedge-shaped member (70, 80, 90) of each pair is displaceable relative to the other wedge-shaped member (70, 80, 90) of the respective pair, wherein the displaceable wedge-shaped members (70, 80, 90), which together cause the displacement of the upper plate (10) in one direction, are coupled to each other by a lever mechanism (95).

3. The alignment device (100) according to claim 2, wherein
the lever mechanism is formed such that the displaceable wedge-shaped members (70, 80, 90), which together cause the displacement of the upper plate (10) in one direction, have at their respective ends in their displacement direction a common lever member (95) rotatably supported in one of the pairs of wedge-shaped members (70, 80, 90), which cause the displacement of the upper plate (10) in the direction perpendicular thereto, and thereby a displacement movement of the one displaceable wedge-shaped member (70, 80, 90) can be transmitted to the other displaceable wedge-shaped member (70, 80, 90) for the displacement of the upper plate (10) in one direction.

4. The alignment device (100) according to claim 3, wherein
the cooperation of the lever members (95) with the corresponding displaceable wedge-shaped members (70, 80, 90), which cause a displacement of the upper plate (10) in one direction, can be adjusted without play by an adjusting device.

5. The alignment device (100) according to any one of claims 1 to 4, wherein
the alignment device (100) further comprises:
two spindles (88, 99) for introducing a mechanical force for displacing the upper plate (10) relative to the lower plate (20), wherein a first spindle (88; 99) of the two spindles (88, 99) is provided for a first displacement direction of the upper plate (10) and a second spindle (99; 88) of the two spindles (88, 99) is provided for a second displacement direction perpendicular to the first displacement direction.

6. The alignment device (100) according to claim 5, wherein
each of the two spindles (88, 99) has on the side opposite to the wedge-shaped members (70, 80, 90) an engagement portion at which the displacement of the upper plate (10) relative to the lower plate (20) can be caused by rotation of the engagement portion.

7. The alignment device (100) according to any one of claims 1 to 6, wherein
the locking mechanism further comprises:
hydraulic clamping cylinders (60) which clamp clamping portions of the alignment device (100) and thereby lock a relative position between the upper plate (10) and the lower plate (20) by clamping.

8. The alignment device (100) according to claim 7, wherein
the alignment device (100) further comprises:
a clamping spindle (66) by which a hydraulic pressure can be generated in the hydraulic clamping cylinders (60) of the locking mechanism for locking the relative position of the upper plate (10) to the lower plate (20), wherein
the clamping spindle (66) has on the side opposite to the generation of the hydraulic pressure an engagement portion at which the hydraulic pressure can be generated by rotation of the engagement portion.

9. The alignment device (100) according to claim 7 or 8, wherein
clamping bars (40, 50) having the clamping portions and the hydraulic clamping cylinders (60) are arranged relative to each other in the alignment device (100) such that when clamping is released, the upper plate (10) cannot be lifted off the lower plate (20).

10. The alignment device (100) according to claim 9, wherein
the alignment device (100) further comprises an adjusting tool (110) which can be received by a working spindle (1300) of the machine tool (1000) and with which the spindles (88, 99) for introducing the mechanical force for displacing the upper plate (10) relative to the lower plate (20) and the clamping spindle (66) can be operated at their engagement portions.

11. The alignment device (100) according to claim 10, wherein
the adjusting tool (110) is further configured to provide axial compensation by a resilient member when the adjusting tool (110) is engaged with one of the spindles (66, 88, 99) of the alignment device (100).

12. The alignment device (100) according to claim 10 or 11, wherein
the adjusting tool (110) is further configured to adjust a torque which is to be transmitted from the working spindle (1300) to the spindle (66, 88, 99) of the alignment device (100) via the adjusting tool (110).

13. A method for aligning a position of a workpiece (400) on a machine table (300) of a numerically controlled machine tool (1000), comprising the following steps:
- clamping the workpiece (400) which is to be machined,
- receiving a measuring probe in a working spindle (1300) of the machine tool (1000),
- probing the clamped workpiece (400) to determine an offset of a concentricity of the clamped workpiece (400) with respect to the axis of rotation of the machine table (300) of the machine tool (1000),
- adjusting the workpiece (400) with respect to the axis of rotation of the machine table (300) by means of an aligning device (100) according to any one of claims 1 to 12, comprising the following sub-steps:
∘ receiving an adjusting tool (110) in the working spindle (1300),
∘ releasing a locking of the upper plate (10) with respect to the lower plate (20) by means of the adjusting tool (110),
∘ displacing the upper plate (10) with respect to the lower plate (20) of the aligning device (100) by the offset of the concentricity of the workpiece (400) with respect to the axis of rotation of the machine table (300) determined by the measuring probe, wherein the displacement of the upper plate (10) with respect to the lower plate (20) takes place by means of the adjusting tool (110), and
∘ locking the adjusted relative position of the upper plate (10) with respect to the lower plate (20) by means of the adjusting tool (110).

## Revendications

1. Dispositif d'alignement (100) pour ajuster une pièce à usiner sur une table de machine (300) d'une machine-outil à commande numérique (1000), comprenant :
une plaque inférieure (20) qui peut être montée sur la table de machine (300) de la machine-outil (1000),
une plaque supérieure (10) disposée de manière mobile sur la plaque inférieure (20), sur la face supérieure de laquelle un porte-pièce peut être monté,
un mécanisme de réglage qui est réalisé entre la plaque inférieure (20) et la plaque supérieure (10) pour ajuster la position relative de la plaque supérieure (10) par rapport à la plaque inférieure (20),
et
un mécanisme de blocage pour bloquer la position relative de la plaque supérieure (10) par rapport à la plaque inférieure (20),
**caractérisé en ce que**
le mécanisme de réglage est réalisé entre la plaque inférieure (20) et la plaque supérieure (10) de telle sorte que, par l'introduction d'une force mécanique, des éléments en forme de coin (70, 80, 90) soient déplacés l'un par rapport à l'autre de telle sorte que la plaque supérieure (10) soit déplacée par rapport à la plaque inférieure (20) et sensiblement parallèlement à un plan de la table de machine (300) sur laquelle la plaque inférieure (20) est montée,
deux paires opposées d'éléments en forme de coin (70, 80, 90) déplaçant la plaque supérieure (10) dans une direction par rapport à la plaque inférieure (20) de telle sorte que la plaque supérieure (10) puisse être déplacée par rapport à la plaque inférieure (20) dans deux directions perpendiculaires l'une à l'autre.

2. Dispositif d'alignement (100) selon la revendication 1, dans lequel
le mécanisme de réglage est en outre réalisé de telle sorte qu'un élément en forme de coin (70, 80, 90) de chaque paire puisse être déplacé par rapport à l'autre élément en forme de coin (70, 80, 90) de la paire respective, les éléments en forme de coin déplaçables (70, 80, 90), qui provoquent conjointement le déplacement de la plaque supérieure (10) dans une direction, étant accouplés l'un à l'autre au moyen d'un mécanisme de levier (95).

3. Dispositif d'alignement (100) selon la revendication 2, dans lequel
le mécanisme de levier est réalisé de telle sorte que les éléments en forme de coin déplaçables (70, 80, 90), qui provoquent conjointement le déplacement de la plaque supérieure (10) dans une direction, comprennent, au niveau de leurs extrémités respectives dans leur direction de déplacement, un élément de levier commun (95) qui est supporté en rotation dans l'une des paires d'éléments en forme de coin (70, 80, 90), qui provoquent le déplacement de la plaque supérieure (10) dans la direction perpendiculaire à celle-ci, et ainsi un mouvement de déplacement de l'un des éléments en forme de coin déplaçables (70, 80, 90) peut être transmis à l'autre élément en forme de coin déplaçable (70, 80, 90) pour le déplacement de la plaque supérieure (10) dans une direction.

4. Dispositif d'alignement (100) selon la revendication 3, dans lequel
la coopération des éléments de levier (95) avec les éléments en forme de coin déplaçables correspondants (70, 80, 90), qui provoquent un déplacement de la plaque supérieure (10) dans une direction, peut être réglée sans jeu au moyen d'un dispositif de réglage.

5. Dispositif d'alignement (100) selon l'une quelconque des revendications 1 à 4, dans lequel
le dispositif d'alignement (100) présente en outre :
deux broches (88, 99) pour introduire une force mécanique pour déplacer la plaque supérieure (10) par rapport à la plaque inférieure (20), une première broche (88 ; 99) des deux broches (88, 99) étant prévue pour une première direction de déplacement de la plaque supérieure (10) et une deuxième broche (99 ; 88) des deux broches (88, 99) étant prévue pour une deuxième direction de déplacement perpendiculaire à la première direction de déplacement.

6. Dispositif d'alignement (100) selon la revendication 5, dans lequel
chacune des deux broches (88, 99) comprend, sur le côté opposé aux éléments en forme de coin (70, 80, 90), une section de mise en prise au niveau de laquelle, par rotation de la section de mise en prise, le déplacement de la plaque supérieure (10) par rapport à la plaque inférieure (20) peut être provoqué.

7. Dispositif d'alignement (100) selon l'une quelconque des revendications 1 à 6, dans lequel
le mécanisme de blocage présente en outre :
des cylindres de serrage hydrauliques (60) qui serrent des sections de serrage du dispositif d'alignement (100) et bloquent ainsi une position relative entre la plaque supérieure (10) et la plaque inférieure (20) par serrage.

8. Dispositif d'alignement (100) selon la revendication 7, dans lequel
le dispositif d'alignement (100) présente en outre :
une broche de serrage (66) au moyen de laquelle une pression hydraulique peut être générée dans les cylindres de serrage hydrauliques (60) du mécanisme de blocage pour bloquer la position relative de la plaque supérieure (10) par rapport à la plaque inférieure (20), dans lequel
la broche de serrage (66) comprend, sur le côté opposé à la génération de la pression hydraulique, une section de mise en prise au niveau de laquelle, par rotation de la section de mise en prise, la pression hydraulique peut être générée.

9. Dispositif d'alignement (100) selon la revendication 7 ou 8, dans lequel
des barres de serrage (40, 50) qui comprennent les sections de serrage et les cylindres de serrage hydrauliques (60) sont disposés l'un par rapport à l'autre dans le dispositif d'alignement (100) de telle sorte que, lors d'un serrage desserré, la plaque supérieure (10) ne puisse pas être soulevée de la plaque inférieure (20).

10. Dispositif d'alignement (100) selon la revendication 9, dans lequel
le dispositif d'alignement (100) présente en outre un outil de réglage (110) qui peut être reçu par une broche de travail (1300) de la machine-outil (1000) et avec lequel les broches (88, 99) pour introduire la force mécanique pour déplacer la plaque supérieure (10) par rapport à la plaque inférieure (20) et la broche de serrage (66) peuvent être actionnées au niveau de leurs sections de mise en prise.

11. Dispositif d'alignement (100) selon la revendication 10, dans lequel
l'outil de réglage (110) est en outre conçu pour fournir une compensation axiale au moyen d'un élément élastique lorsque l'outil de réglage (110) est en prise avec l'une des broches (66, 88, 99) du dispositif d'alignement (100).

12. Dispositif d'alignement (100) selon la revendication 10 ou 11, dans lequel
l'outil de réglage (110) est en outre conçu pour régler un couple qui doit être transmis de la broche de travail (1300) à la broche (66, 88, 99) du dispositif d'alignement (100) par le biais de l'outil de réglage (110).

13. Procédé d'alignement d'une position d'une pièce à usiner (400) sur une table de machine (300) d'une machine-outil à commande numérique (1000), comprenant les étapes suivantes :
- serrage de la pièce à usiner (400) qui doit être usinée,
- réception d'un palpeur de mesure dans une broche de travail (1300) de la machine-outil (1000),
- palpage de la pièce à usiner serrée (400) pour déterminer un décalage d'une rotation de la pièce à usiner serrée (400) par rapport à l'axe de rotation de la table de machine (300) de la machine-outil (1000),
- ajustement de la pièce à usiner (400) par rapport à l'axe de rotation de la table de machine (300) au moyen d'un dispositif d'alignement (100) selon l'une quelconque des revendications 1 à 12, comprenant les sous-étapes suivantes :
∘ réception d'un outil de réglage (110) dans la broche de travail (1300),
∘ desserrage d'un blocage de la plaque supérieure (10) par rapport à la plaque inférieure (20) au moyen de l'outil de réglage (110),
∘ déplacement de la plaque supérieure (10) par rapport à la plaque inférieure (20) du dispositif d'alignement (100) du décalage déterminé par le palpeur de mesure de la rotation de la pièce à usiner (400) par rapport à l'axe de rotation de la table de machine (300), le déplacement de la plaque supérieure (10) par rapport à la plaque inférieure (20) s'effectuant au moyen de l'outil de réglage (110), et
∘ blocage de la position relative ajustée de la plaque supérieure (10) par rapport à la plaque inférieure (20) au moyen de l'outil de réglage (110).
